# EUROPEAN PATENT SPECIFICATION

(11) **EP 1 843 614 B1**
(45) Date of publication and mention of the grant of the patent: **02.03.2011**
(21) Application number: 06290570.8
(22) Date of filing: 05.04.2006
(51) Int. Cl.: H04L 29/06, H04W 36/14

(54) **Method of performing a handover in a mobile communication system**
Weiterreichungsverfahren in einem Mobilkommunikationssystem
Procédé de transfert d'appel dans un système de communication mobile

(43) Date of publication of application: 10.10.2007
(73) Proprietor: Alcatel Lucent, 75008 Paris (FR)
(72) Inventor: Strauss, Thomas, Dipl.-Ing., 73734 Esslingen (DE); Wahl, Stefan, Dipl.-Ing., 71701 Schwieberdingen (DE); Tomsu, Marco, Dipl.-Ing., 71254 Ditzingen (DE)
(74) Representative: Schmidt, Werner Karl

(56) References cited:
- WO-A-2005/027563
- WO-A-2006/011730
- WO-A2-02/103951

## Description

The present invention relates to a method of performing a handover of a session from a first network to a second network, in particular a handover for a terminal having a session-oriented first connection with a communication partner via a first access network, a terminal, a node of the first access network, a node of the second access network, a call server function, and a communication network to execute said method.

With a multitude of access networks and operator networks available, a user of a mobile telecommunications device will want to freely move while staying connected to an active connection without interruption. This requires to keep voice or multimedia sessions alive during changes of access networks and operator networks. Although a high standard of roaming has been already achieved, some scenarios may still be considered critical.

Let us consider, for example, the case that an IMS/TISPAN terminal, e.g., a mobile phone, moves from one access network, e.g., WLAN, to another access network, e.g., UMTS, or from one operator A to another operator B (IMS = IP Multimedia Subsystems; IP = Internet Protocol; TISPAN = Telecommmunications and Internet converged Services and Protocols for Advanced Networks; WLAN = Wireless Local Area Network; UMTS = Universal Mobile Telecommunications System). When the terminal is in a call or a multimedia session, the session should not be interrupted although the terminal might use a new access network or a new operator. Technologies such as GSM, UMTS and IMS do not fully cover handovers between different access technologies and differently operated access or operator networks (GSM = Global System for Mobile Communications). Moreover, current IMS-based scenarios are not well suited for a future network infrastructure because they do not fully recognize session border elements and their role for hiding network topologies and user movements from any outside partner.

WO 2005/027563 A1 describes a handover of a communication established between a mobile terminal and a communication partner from a first end-to-end communication link via a first network to a second end-to-end communication link via a second network. Initially, data packets are transferred between the mobile terminal and the communication partner through a WLAN network. Then, a trigger is received by the mobile terminal in response to events such as deteriorating WLAN channel quality, for example, that necessitates a handover from the current to an alternative network. In response to the trigger, the mobile terminal sends a SIP re-invite message to the communication partner through a new network, e.g., a UMTS network (SIP = Session Initiation Protocol).

As the mobile terminal already knows the IP address of the communication partner, all SIP messages between the mobile terminal and the communication partner can go directly but the protocol does allow such messages to be routed via a UMTS SIP Register and Proxy Server. The re-invite message allows the mobile terminal and the communication partner to re-negotiate details of the ongoing session. The most relevant parameter of the invention described in WO 2005/027563 A1 is the IP address of the mobile terminal's UMTS interface that is to be used by the communication partner to direct data packets after handover completion.

WO 2006/011730 A1 describes a handoff system between a mobile communication network and a WLAN for providing a seamless service when an access terminal moves from the mobile communication network to the WLAN. The system is based on an IP routing function. If the access terminal detects its movement to the WLAN, it exchanges information with an access router of the WLAN for tunneling between a packet data service node (= PDSN) of the mobile communication network and the access router. The access router sets up a tunnel for packet delivery between the access router and the PDSN, and delivers packets delivered from a correspondent node to the access terminal via the set tunnel.

It is the object of the present invention to perform a handover of a terminal from a first access network or operator network to a second access network or operator network.

The object of the present invention is achieved by a method of performing a handover for a terminal having a session-oriented first connection with a communication partner via a first access network, whereby the method comprises the steps of detecting, by the terminal, the availability of a second access network, registering the terminal via the second access network at a call server function, sending, by the terminal, a SIP invite message directed to the communication partner via the second access network, terminating the SIP invite message by a node of the second access network, changing, by said node of the second access network, an address of the terminal given in a Session Description Protocol payload of the SIP invite message to an address of said node of the second access network, and sending a SIP invite message with the changed Session Description Protocol payload from said node of the second access network to the call server function, routing the SIP invite message with the changed Session Description Protocol payload received by the call server function to a node of the first access network, and opening a second connection between the node of the first access network and the terminal via the node of the second access network.

Besides, the object of the present invention is achieved by a communication network comprising a first node of a first access network, a second node of a second access network, and a call server function for performing a handover for a terminal having a session-oriented first connection with a communication partner via the first access network, wherein the call server function is adapted to register the terminal after reception of a registration request from the terminal via the second access network after detecting, by the terminal, the availability of the second access network, wherein the second node is adapted to receive a SIP invite message sent by the terminal and directed to the communication partner via the second access network, terminate the received SIP invite message, change an address of the terminal given in a Session Description Protocol payload of the SIP invite message to an address of said second node, and send a SIP invite message with the changed Session Description Protocol payload to the call server function, wherein the call server function is further adapted to route the SIP invite message with the changed Session Description Protocol payload received from the second node to the first node, and wherein the first node and the second node are adapted to open a second connection between the first node and the terminal via the second node.

Said first and second connections are non-circuit-switched multimedia connections, in particular packet-based communication connections. Within the communication networks carrying the packet-based communication, there is no single path or circuit that carries the packets between the terminal and the communication partner. Instead, the communication network may be considered a fabric of links, switches and routers that carry packets in an efficient manner. Packets associated with the communications of the terminal with the communication partner may travel on any number of paths, but always containing, in the case of the first connection, the first node and, in the case of the second connection, the first and the second node.

Terminating a SIP INVITE message means that a network element does not forward a received message to the originally intended destination of the message. Instead, the network element functions as a destination terminal of the message and stops the message at the network element.

The communication network may comprise at least two access networks providing access to the communication network for terminals wishing to communicate via the communication network. The access networks of the communication network may be associated with different communication technologies and provided by different operators. The communication network may comprise a plurality of access networks and sub-networks and provide a user with an integral communication experience.

With the method according to the present invention, a voice or multimedia session can be kept due to handovers between different access or operator networks. Standard SIP signalling is sufficient, so no new standardization effort is required.

The present invention enables an intelligent way of handovering an ongoing multimedia session across different ISPs which will be required as an important common and standard feature in future IMS and TISPAN networks (ISP = Internet Service Provider).

Further advantages are achieved by the embodiments of the invention indicated by the dependent claims.

According to a preferred embodiment of the invention, the first and the second access networks serving as access networks have an enhanced node, preferably a session border controller (= SBC), which recognizes a mobility event and which has means that it can fork, i.e., divide an ongoing call into branches and become part of a daisy chain. After the transfer of the call, the enhanced node, preferably the enhanced SBC, recognizes an unused media path of the forked call and closes it.

A SBC as meant in the present description is a piece of network equipment or a collection of functions that control realtime session traffic at the signalling, callcontrol, and packet layers as the traffic packets cross a notional packet-to-packet network border between networks or between network segments. SBCs are critical to the deployment of VoIP networks because they address the inability of real-time session traffic to cross a NAT device or firewall boundaries (VoIP = Voice over IP).

SBCs are put into the signalling and media path between a calling and a called party. The SBC acts as if it was the called VoIP phone and places a second call to the called party. The effect of this behaviour is that not only the signalling traffic, but also the media traffic (voice, video etc) crosses the SBC. Without an SBC, the media traffic travels directly between the VoIP phones. Private SBCs are used along with firewalls to enable VoIP calls to and from a protected enterprise network. Public VoIP service providers use SBCs to allow the use of VoIP protocols from private networks with Internet connections using NAT.

Additionally, some SBCs can also allow VoIP calls to be set up between two phones using different VoIP signalling protocols (SIP, H.323, Megaco/MGCP, etc.) as well as performing transcoding of the media stream when different codecs are in use (MGCP = Media Gateway Control Protocol). Many SBCs also provide firewall features for VoIP traffic (denial of service protection, call filtering, bandwidth management, etc.).

Signalling protocols such as H.323, MGCP, and SIP transfer information including media session endpoint IP addresses and UDP (= User Datagram Protocol) port numbers in different layers above OSI (= Open System Interconnection) Layer 4 (IETF TCP/UDP) (IETF = Internet Engineering Task Force; TCP = Transmission Control Protocol). This information cannot be seen by a normal firewall or NAT device, so the subsequent sessions set up are not recognized, do not pass through firewalls, and have incompatible IP addresses across NAT boundaries. SBCs allow NAT and firewall traversal, normally by incorporating those elements with signalling controllers for the required signalling protocols.

The node of the first access network, preferably a SBC, recognizes the received SIP INVITE message with the changed SDP payload as related to the handover. The recognition may be based on the fact that the SIP INVITE message comprises a SDP payload with the address of the node of the second access network. Triggered by the received handover-related SIP INVITE message, the node of the first access network sends a confirmation message with the SDP payload including an address of the node of the first access network to the call server function. The call server function forwards, as soon as it has received the confirmation message with a SDP payload including the address of the node of the first access network, to the node of the second access network. In turn the node of the second access network replies with an acknowledge message sent to the call server function. The call server function forwards this acknowledge message originating from the node of the second access network to the node of the first access network.

Thus, the control server function - as soon as it recognizes that the SIP traffic is related to a handover - serves as a relay element forwarding the SIP traffic from the node of the first access network to the node of the second access network and vice versa.

According to another preferred embodiment of the invention, the communication network serving as home network of the terminal is provided with a call server function which recognizes a so-called mobility event which is composed first, of a current call of an terminal and, second, of further possible access connections of the terminal. In case of such a mobility event, the call server function manages a second call between the current call and the new connection, related to the second IP stack of terminal. Preferably, the call server function is provided by a home call server of the home network of the terminal.

There are two possible sequences how the second call can be established depending on their negotiation procedure. According to a first preferred embodiment of the invention, the node of the first access network forks the first connection after receiving an acknowledge message from the call server function and thus opens the second connection between the node of the first access network, the node of the second access network, and the terminal. Forking means a node opens a second communication leg apart from the already existing first communication leg such that the data stream resembles a fork. In other words, a node divides an existing communication connection into two or more branches.

According to a second preferred embodiment of the invention, the node of the second access network opens a connection to the node of the first access network after sending an acknowledge message to the call server function and thus opens a second connection between the node of the first access network, the node of the second access network, and the terminal.

In a preferred embodiment, the first connection can be cancelled in two different processes. Cancelling means that an existing communication connection is closed such that no data traffic can pass the communication connection any more. The first possibility relates to the case that the first node has opened the second connection. As soon as the terminal recognizes that it receives the same call on both connections, the terminal cancels the first connection. The other possibility relates to the case that the terminal has opened the second connection. As soon as the first node recognizes that it receives the same call on both connections, the first node cancels the first connection.
- Fig. 1: is a block diagram of a communication network according to an embodiment of the invention.
- Fig. 2: is a message flow diagram according to a first embodiment of the invention.
- Fig. 3: is a block diagram showing the opening of a second connection according to a first embodiment of the invention.
- Fig. 4: is a block diagram showing the opening of a second connection according to another embodiment of the invention.
- Fig. 5: is a block diagram showing in parallel a first and a second connection according to an embodiment of the invention.
- Fig. 6: is a block diagram showing the termination of a first connection according to an embodiment of the invention.
- Fig. 7: is a block diagram with details of network elements of a communication network and of terminals communicating via the communication network according to an embodiment of the invention.

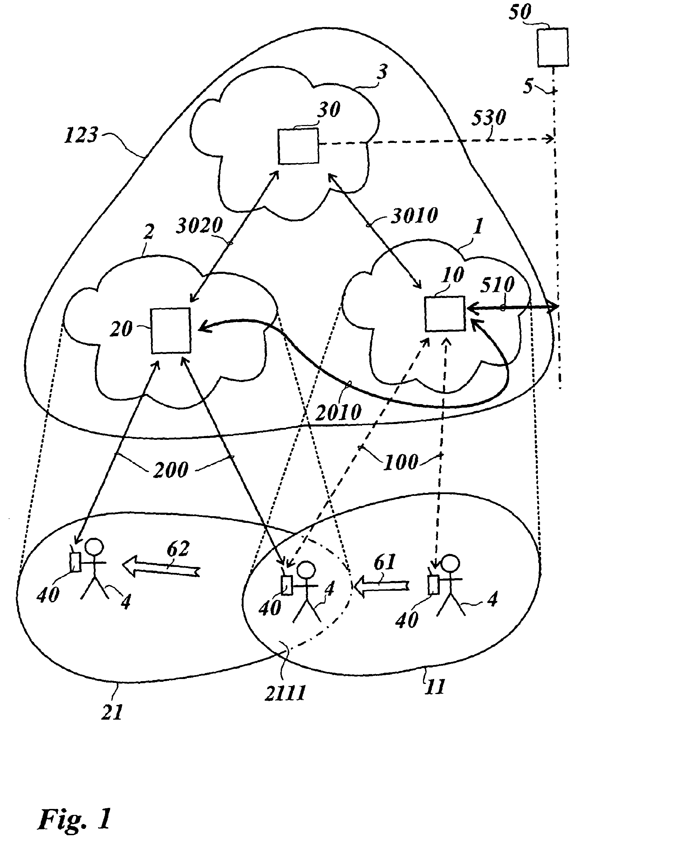

Figure 1 shows a communication network 123 according to an embodiment of the invention. The communication network 123 is a network through which voice calls, e.g., VoIP calls, and multimedia traffic can be routed. For example, data and video calls, e.g., data of a video conference, can be routed or data can be transmitted as packets through the communication network 123. The communication network 123 comprises a first IP access network 1, a second IP access network 2, and a home communication network 3.

The communication networks 1, 2 and 3 are connected with each other and are used for the establishment of IP based multi-media sessions. The access networks 1 and 2 may be access networks or operator domains maintained by different service providers or operators and/or operated under different technologies. The access networks 1 and 2 may be networks through which access may be gained to the communication network 123. For example, the access network 1 may be a UMTS access network operated by a first service provider, and the access network 2 may be a WLAN access network operated by another service provider.

The access network 1 comprises a network node 10, which may serve as a SBC. Likewise, the access network 2 comprises a network node 20, which may also serve as a SBC. The communication network 3 may be a core network of the communication network 123, comprising a call server function 30. The call server function 30 may be implemented as a stand-alone server providing call state control functions within the communication network 123.

Preferably, the call server function 30 is composed of one or several interlinked computers, i.e., a hardware platform, a software platform basing on the hardware platform and several application programs executed by the system platform formed by the software and hardware platform. The functionalities of the server 30 are provided by the execution of these application programs. The application programs or a selected part of these application programs constitute a computer software product providing a call control service as described in the following, when executed on the system platform. Further, such computer software product is constituted by a storage medium storing these application programs or said selected part of application programs.

However, it is also possible that the call server function 30 is an application running on another network node, e.g., a network node of the communication network 123. For example, the call server function 30 may be implemented on one of the nodes 10, 20 also serving for other tasks. It is possible that the call server function 30 is integrated into the first access network 1 or the second access network 2 which then may serve as a home network of the terminal 40. In still another embodiment, the call server function 30 may be distributed over two or more separate network nodes which cooperate to provide the functions of the call server function 30.

A terminal 40 is used by a user 4 to set up a session with another terminal 50 via the communication network 123. The terminals 40, 50 are end devices adapted to handle SIP-based communication over IP networks. The terminal 40 is a mobile end device with a SIP UA (= User Agent), e.g., a VoIP-enabled mobile phone or a laptop with a VoIP softphone application. The terminal 50 may be any IP-enabled end device with a SIP UA, fixed or mobile, e.g., a VoIP-enabled office phone or a workstation with a VoIP softphone application.

The user 4 of the terminal 40 may be roaming between different access networks. Initially, the terminal 40 may have gained access to the communication network 123 via the access network 1 and established a first connection 100 to a node 10 of the first access network 1. The packets associated with the connection 100 may flow from the node 10 via a communication connection 510 through an access network 5 of the terminal 50 to the other terminal 50. The call control of the first connection 100 between the terminal 40 and the communication partner terminal 50 may be supervised and controlled on the signalling and control level by a call control function implemented in the home network 3 of the terminal 40, preferably associated with the call server function 30. Controlling and signalling traffic associated with communication connections handled or managed by the call server function 30 is exchanged via a connection 530 with other networks, e.g., with additional access networks of the communication network 123. For example, the network 5 providing the terminal 50 with access to the communication network 123 may be such another access network of the communication network 123.

This first connection 100 may be maintainable as long as the terminal 40 is located within the coverage area 11 of the first access network 1. When the terminal 40 is located in the section 2111 represented by the overlapping coverage areas 11 and 21 of the first access network 1 and of the second access network 2, respectively, the terminal 40 is able to access the first access network 1 via the first connection 100 and at the same time access the second access network 2 via a second connection 200.

When the terminal 40 has moved out of the section 2111 into the coverage area 21, the terminal 40 is able to access, via the connection 200, the second access network 2, only. Therefore, the situation described with reference to Figure 1 represents a typical roaming situation of a terminal 40 moving from the coverage area 11 of the first access network 1 to the coverage area 21 of the second access network 2.

Preferably, the terminal 40 is an IMS/TISPAN-enabled terminal. The terminal 40 features the ability to recognize the reachability of different access or operator networks, i.e., to detect the spatial extent of a coverage area of a access network, and is enabled to have multiple IP connections open. For this end, it has at minimum two IP stacks for having two possible connections open.

Before the user 4 can use the terminal 40 to establish a multi-media session, the terminal 40 has to be registered to acquire a unique Universal Resource Identifier (= URI). In the case of a VoIP call, this URI may be for example "sip: user4@provider.net". In order to make/receive calls via a VoIP connection, the user 4 must associate the terminal 40 with this URI. This process is called registration.

When the user 4 turns on his terminal 40 comprising a SIP-enabled phone, the UA inside it sends a SIP register packet containing the local IP address of the SIP phone to his selected proxy server 10, which will in turn pass the SIP register packet via a connection 3010 to a registrar associated with the home communication network 3 of the terminal 4. The registrar stores the IP address and the URI in a location register for future reference. The advantage of this process is that it allows the user 4 to have several different devices capable of making VoIP calls without changing his public URI. In order to establish a call to the terminal 50, a user of the terminal 50 has to go through a corresponding registration process.

Let us consider the case that the user 4 has registered his terminal 40 at a registrar associated to the communication network 3 which represents the home network of his terminal 40 and, likewise, the user of the terminal 50 has also registered his terminal 50. After this initial registration process, the user 4 has decided to call the terminal 50. Therefore, the user 4 enters the address associated with the terminal 50 into his terminal 4 and initiates a call, e.g., by pressing a key on his terminal 40, which causes the UA inside of the terminal 40 to send a SIP INVITE message to its selected proxy server, represented by a node 10 of the first access network 1. The challenge for the node 10 is to obtain the IP address of the other terminal 50 so that voice data can be routed between them. This is called the SIP discovery process. The SIP discovery process follows the following three steps. First, the UA in the terminal 40 adds its own address to the INVITE message so that the message response can be routed back along the same route. Second, the node 10 then uses the domain name server (= DNS) to obtain the IP address of a proxy server in the domain 5 of the other terminal 50. Eventually, the modified INVITE message moves onto the newly resolved IP address. Using this process allows SIP to use features of the existing functionality within the network such as simple text based identifiers and traffic based load balancing.

Once the INVITE message has arrived at the correct proxy within the network 5, it needs to be mapped to a specific IP address for the SIP phone of the terminal 50. This is done by looking up the URI in a location register. The location register will then return the current IP address that was associated to the terminal 50 during the registration step. Now the INVITE message can finally be sent to the terminal 50.

The next problem to address before the call can be accepted is to ensure that both ends of the call are using the same data format. This is solved using information passed in another protocol called the Session Description Protocol (= SDP). The SIP INVITE message from the terminal 40 also contains an SDP payload which describes such items as the voice sample rate and compression codec supported by the terminal 40. Provided that the terminal 50 is compatible with one of these formats, the user of the terminal 50 is notified that the user 4 is trying to call him, i.e., the phone of his terminal 50 will ring. Once the user of the terminal 50 answers the phone and hence accepts the call, his IP address is sent back to the user 4 in a response message along with an SDP payload containing the selected codec configuration, which then follows the same route across the network 5, the connection 510, and the connection 100 back to the terminal 40. The terminal 40 will then send an ACK (= Acknowledge) message to signal that the setup is complete.

Now both terminals 40, 50 have each other's up-to-date IP addresses, enabling them to start sharing voice data. This is normally directly peer-to-peer between the two terminals 40, 50 using RTP over IP (RTP = Real Time Transport Protocol). As a result, the voice data does not travel via the same route as the control and signalling data.

Once the session has been initialized, the job of SIP is largely done. Note that SIP messages can be sent during the voice call to update the configuration, send text messages or even add other parties to the call.

Let us consider the case of an ongoing VoIP session 100, 510 between the terminal 40 and the terminal 50, when the user 4 moves from the coverage area 11 along the path 61 to the coverage area section 2111. It is in this overlapping section 2111, that the terminal 40 recognizes the reachability of the second access network 2. The terminal 40 is currently in a call or a session with the terminal 50 and the corresponding media flow is transmitted between the node 10 and the first IP stack of the terminal 40.

The subject-matter described so far with reference to Fig. 1 is well known from the prior art.

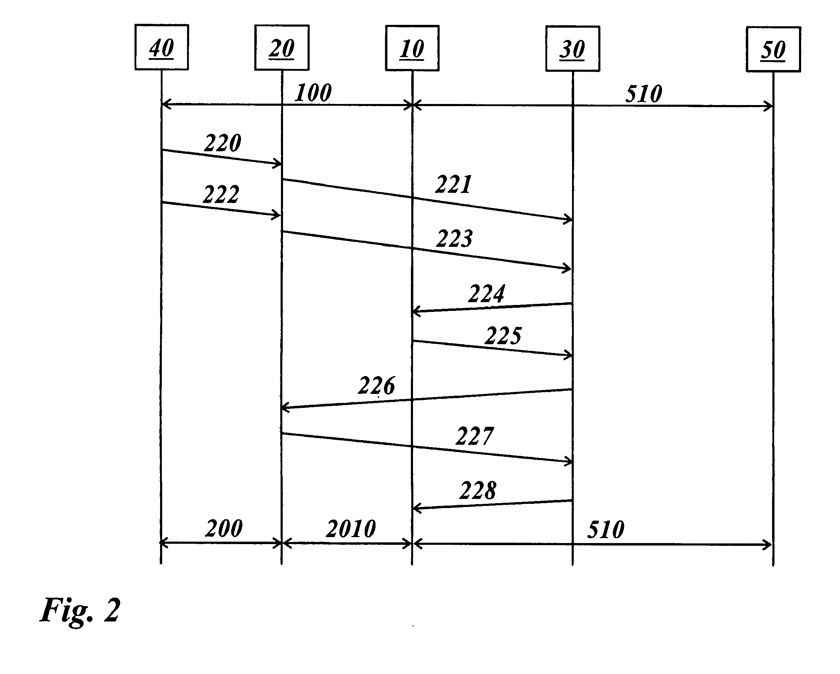

Fig. 2 gives an overview of the messages that flow between the network elements of the communication network 123 and the terminals 40, 50 during the handover procedure, beginning with the ongoing session 100, 510 between the terminal 40 and the terminal 50.

Once the terminal 40 recognizes the second possible access network, i.e., the second access network 2, it registers - besides the ongoing call connection 100, 510 - via the second access network 2 at a home call server function of its home network 3. Said home call server function is represented by the node 30 within the home network 3. The terminal 40 sends a registration message 220 to the node 20 of the second access network 2 which forwards the registration message 221 to the node 30 in the home network 3. After the terminal 40 has been registered, it now wants to signal a mobility event and sends an INVITE message 222 to its called party 50 due to the recognition of a second possible connection via the second access network 2.

The node 20, which acts as a back-to-back user agent (= B2BUA) terminates the received INVITE message 222 and changes the SDP payload. SDP is a format for describing streaming media initialization parameters. A session description expressed in SDP is a short structured textual description of the name and purpose of the session, and the media, protocols, codec formats, timing and transport information that are required to decide whether a session is likely to be of interest and to know how to start media tools to participate in the session. As resources necessary to participate in a session may be limited, some additional information may also be desirable, including information about the bandwidth to be used by the conference and contact information for the person responsible for the session.

For an IP unicast session, i.e., a point-to-point session, the remote address for the media stream and the transport port for the contact address are given. This makes sense in the context of an invitation such as SIP, where the person making the call gives information about where the person being called should send his audio and video streams. The response to the invitation would then give similar information about where the caller should send her audio and video streams. Thus, the SDP payload includes the session name and a description of its purpose, the times the session is active, the media comprising the session, and information to receive those media (addresses, ports, formats and so on).

The node 20 changes the address data given in the SDP payload, i.e., the address of the terminal 40, to the address of the node 20 and sends a modified INVITE message 223 to the call server function 30. The call server function 30 recognizes that a second possible access network, i.e., the second access network 2, is available for the terminal 40 and that the received INVITE message 223 results in a mobility event. Hence the call server 30 routes received INVITE message 223 as an INVITE message 224 to the node 10 of the first access network 1. The node 10 of the access network 1 recognizes with the received INVITE message 224 the mobility event and sends a 200 OK message 225 with a SIP payload including its address back to the call server function 30.

The call server function 30 forwards the received 200 OK message 225 with a SDP payload including the address of the node 10 as message 226 to the node 20. After the node 20 has received the 200 OK message 226, it sends an ACK message 227 to the call server function 30. The call server function 30 forwards the received ACK message 227 as message 228 to the node 10. After this, a second call connection 200, 2010, 510 is established between the terminal 40 and the terminal 50, using the node 20 and the node 10 as daisy chain links.

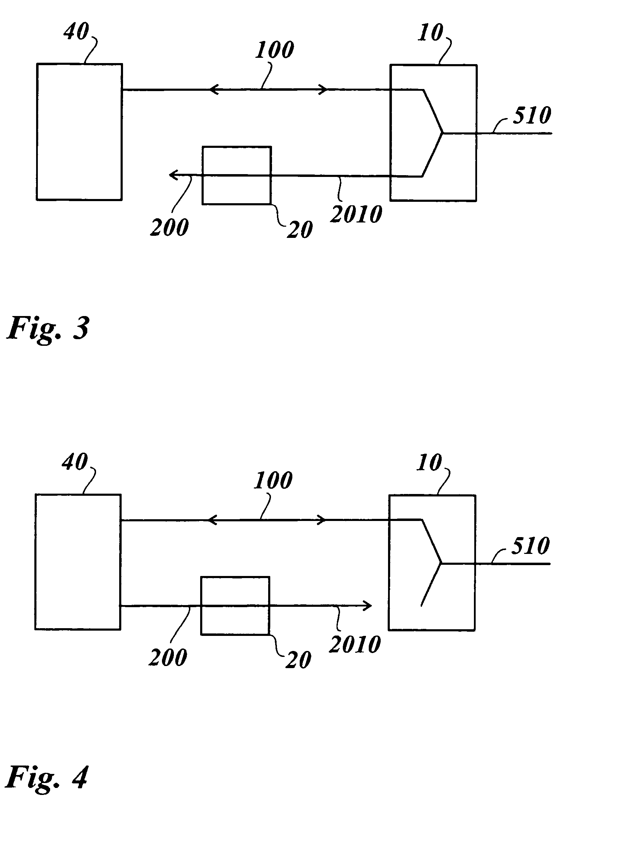

Figure 3 shows a first possible sequence how the second call 200 can be established depending on the negotiation procedure. Figure 3 shows the terminal 40 and the node 10 of the first access network 1 and the node 20 of the second access network 2. The ongoing connection 100 between the terminal 40 and the node 10 of the first access network 1 is connected to the terminal 50 via the connection 510. After the node 10 receives the ACK message 228 from the call server function 30, it forks the call and opens a connection 2010 to the node 20. The node 20 establishes the final leg of the connection 200 to the terminal 40. This way, the new connection 200, 2010 is completed and the call is transmitted on both connections 100 and 200, 2010.

Figure 4 shows another possible sequence how the second call connection 200, 2010 can be established depending on the negotiation procedure. Similar as already described with regard to Figure 3, Figure 4 shows the terminal 40 which has an established and ongoing connection 100 to the node 10 of the first access network 1. The connection from the node 10 to the other terminal 50 is established via the connection 510. After the node 20 of the second access network 2 sends the ACK message 227 to the call server function 30 is opens a connection 2010 to the node 10 of the first access network 1. As the new connection 200, 2010 is completed, a call is transmitted on both connections, the connection 100 and the connection 200, 2010.

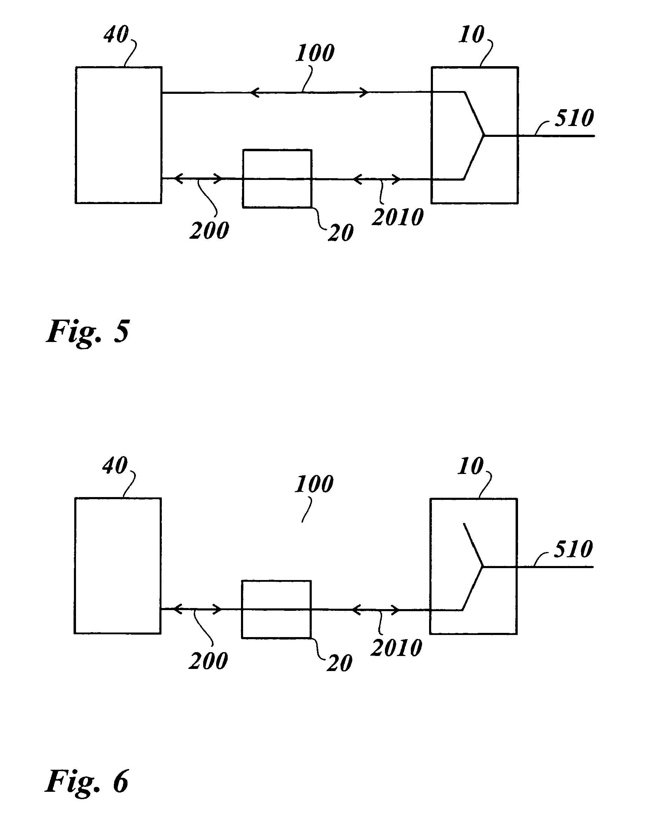

Figure 5 shows the completed second connection 200, 2010 which is established concurrently with the first connection 100. The terminal 40 communicates with the other terminal 50 via two parallel connection legs, a first connection 100 and a second connection 200, 2010. The first connection 100 is directed between the terminal 40 and the node 10, whereas the second connection is in a first step between the terminal 40 and the second node 20 and in a second step between the node 20 and the node 10. Between the node 10 and the other terminal 50 the data connection is limited to a single connection 510.

As soon as the terminal 40 (in case the node 10 starts the connection as shown in Figure 3) or the node 10 (in case the terminal 40 starts the connection as shown in Figure 4) recognizes that it receives the same call on both connections, i.e., on connection 100 and connection 200, 2010, one of them, the terminal 40 or the node 10, cancels the first connection 100.

This situation is shown in Figure 6. As the terminal 40 and node 10, respectively, does not send any call data over the first connection 100, the node 10 and the terminal 40, respectively, recognizes that it does not receive any data from the first connection 100 and also closes this connection 100. Therefore, the new connection, i.e., the second connection 200, 2010 now flows between the terminal 40 and the other terminal 50 via the first node 10 and the second 20 in a daisy chain.

During the existing session, the media flow is also transmitted over the node 10 in the former visited network 1. As long as the terminal 40 crosses different access and/or operator networks, the call or session will be routed through the established daisy chain of nodes. After the call or session is released, for all subsequent sessions the node of the former visited networks are not involved anymore.

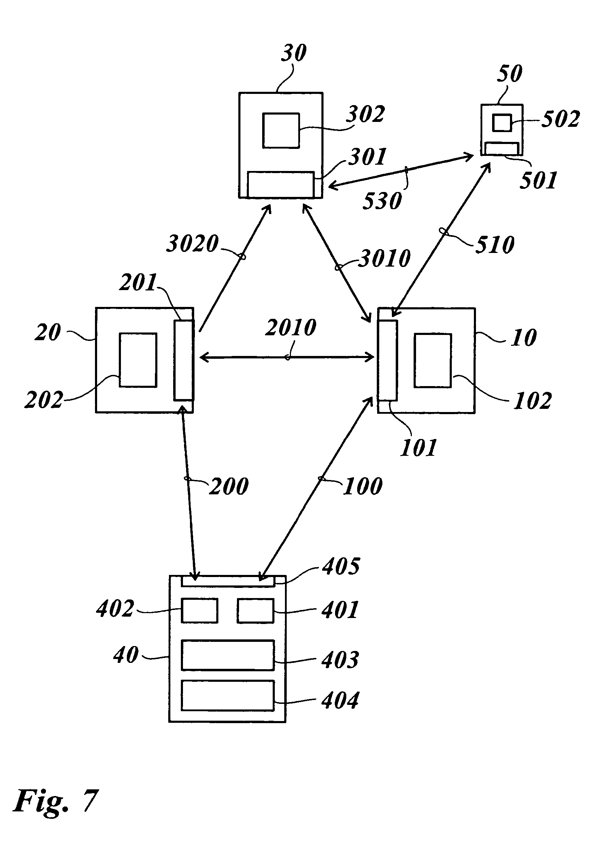

Fig. 7 shows the communicating terminals 40 and 50 and the network elements of the communication network 123, i.e., the node 10 of the first access network 1, the node 20 of the second access network 2, the call server function 30, the terminal 40, and the communication partner 50, i.e., the other terminal communicating with the terminal 40, from a functional point of view.

The node 10 of the first access network 1 comprises an interface 101 for receiving and sending messages and exchanging data with the other network elements 20, 30 and the terminals 40, 50, and a control unit 102 for controlling the functions executed by the node 10. The interface 101 may comprise means to operate under virtually any protocol, e.g., to exchange bearer and signalling/control data messages over the connections 100, 2010, 3010, 510 under SIP, RTP, SDP, TCP, UDP, IP, etc.

The node 20 of the second access network 2 comprises an interface 201 for receiving and sending messages and exchanging data with the other network elements 10, 30 and the terminal 40, and a control unit 202 for controlling the functions executed by the node 20. The interface 101 may comprise means to operate under virtually any protocol, e.g., to exchange bearer and signalling/control data messages over the connections 200, 2010, 3020 under SIP, RTP, SDP, TCP, UDP, IP, etc.

The call server function 30 of the home network 3 comprises an interface 301 for receiving and sending messages and exchanging data with the other network elements 10, 20 and, via network elements shown or omitted in Fig. 7, with the terminals 40, 50, and a control unit 302 for controlling the functions executed by the node 20. The interface 301 may comprise means to operate under virtually any protocol, e.g., to exchange bearer and signalling/control data messages over the connections 3010, 3020, 530 under SIP, RTP, SDP, TCP, UDP, IP, etc.

The terminal 40 comprises a first IP stack 401 to maintain the first connection 100, a second IP stack 402 to maintain the second connection 200, a detection unit 403 to detect the availability of access networks and a control unit for controlling the functions executed by the terminal 40. It also comprises an interface 405 and all the common terminal functions known from the prior art. Likewise, the communication partner terminal 50 comprises an interface 501, a control unit 502 and all the common terminal functions known from the prior art.

In particular, the terminal 40 comprises an application or a detection middleware which determines and switches between the IP stacks 401, 402 to the best available connection.

## Claims

1. A method of performing a handover for a terminal (40) having a session-oriented first connection (100) with a communication partner (50) via a first access network (1),
whereby the method comprises the steps of:
detecting, by the terminal (40), the availability of a second access network (2);
registering the terminal (40) via the second access network (2) at a call server function (30);
sending, by the terminal (40), a SIP invite message directed to the communication partner (50) via the second access network (2);
terminating the SIP invite message by a node (20) of the second access network (2), changing, by said node (20) of the second access network (2), an address of the terminal (40) given in a Session Description Protocol payload of the SIP invite message to an address of said node (20) of the second access network (2), and sending a SIP invite message with the changed Session Description Protocol payload from said node (20) of the second access network (2) to the call server function (30);
routing the SIP invite message with the changed Session Description Protocol payload received by the call server function (30) to a node (10) of the first access network (1); and
opening a second connection (200, 2010) between the node (10) of the first access network (1) and the terminal (40) via the node (20) of the second access network (2).

2. The method of claim 1,
**characterised in**
**that** the method comprises the further steps of:
recognizing, by the node (10) of the first access network (1), the received SIP invite message with the changed Session Description Protocol payload as related to the handover and sending a confirmation message with a Session Description Protocol payload including an address of the node (10) of the first access network (1) to the call server function (30);
forwarding, by the call server function (30), the received confirmation message with the Session Description Protocol payload including the address of the node (10) of the first access network (1) to the node (20) of the second access network (2); and
forwarding, by the call server function (30), an acknowledge message originating in the node (20) of the second access network (2) to the node (10) of the first access network (1).

3. The method of claim 1,
**characterised in**
**that** the method comprises the further steps of:
opening the second connection (200, 2010) between the node (10) of the first access network (1) and the terminal (40) via the node (20) of the second access network (2) by forking, by the node (10) of the first access network (1), the first connection (100) after receiving an
acknowledge message originating in the node (20) of the second access network (2) from the call server function (30).

4. The method of claim 1,
**characterised in**
**that** the method comprises the further steps of:
opening the second connection (200, 2010) between the node (10) of the first access network (1) and the terminal (40) via the node (20) of the second access network (2) by opening, by the node (20) of the second access network (2), a connection (2010) to the node (10) of the first access network (1) after sending an acknowledge message to the call server function (30).

5. The method of claim 1,
**characterised in**
**that** the method comprises the further steps of:
cancelling the first connection (100) by the terminal (40) or the node (10) of the first access network (1) when the terminal (40) or the node (10) of the first access network (1) detects that it receives identical connection-related packets on both the first connection (100) and the second connection (200, 2010).

6. A communication network (123) comprising a first node (10) of a first access network (1), a second node (20) of a second access network (1), and a call server function (30) for performing a handover for a terminal (40) having a session-oriented first connection (100) with a communication partner (50) via the first access network (1), wherein the call server function (30) is adapted to register the terminal (40) after reception of a registration request from the terminal (40) via the second access network (2) after detecting, by the terminal (40), the availability of the second access network (2), that the second node (20) is adapted to receive a SIP invite message sent by the terminal (40) and directed to the communication partner (50) via the second access network (2), terminate the received SIP invite message, change an address of the terminal (40) given in a Session description Protocol payload of the SIP invite message to an address of said second node (20), and send a SIP invite message with the changed Session Description Protocol payload to the call server function (30), that the call server function (30) is further adapted to route the SIP invite message with the changed Session Description Protocol payload received from the second node (20) to the first node (10), and that the first node (10) and the second node (20) are adapted to open a second connection (200, 2010) between the first node (10) and the terminal (40) via the second node (20).

## Patentansprüche

1. Ein Verfahren zum Durchführen eines Handovers für ein Endgerät (40) mit einer über ein erstes Zugangsnetzwerk (1) zu einem Kommunikationspartner (50) aufgebauten ersten sitzungsorientierte Verbindung (100),
wobei das Verfahren die folgenden Schritte umfasst:
Ermitteln, durch das Endgerät (40), der Verfügbarkeit eines zweiten Zugangsnetzwerks (2);
Registrieren des Endgeräts (40) über das zweite Zugangsnetzwerk (2) bei einer Anrufserver-Funktion (30);
Senden, durch das Endgerät (40), einer an den Kommunikationspartner (50) gerichteten SIP-INVITE-Nachricht über das zweite Zugangsnetzwerk (2);
Beenden der SIP-INVITE-Nachricht durch einen Knoten (20) des zweiten Zugangsnetzwerks (2), Ändern, durch den besagten Knoten (20) des zweiten Zugangsnetzwerks (2), einer in einer Sitzungsbeschreibungsprotokoll-Nutzlast der SIP-INVITE-Nachricht angegebenen Adresse des Endgeräts (40) in eine Adresse des besagten Knotens (20) des zweiten Zugangsnetzwerks (2), und Senden einer SIP-INVITE-Nachricht mit der geänderten Sitzungsbeschreibungsprotokoll-Nutzlast von dem besagten Knoten (20) des zweiten Zugangsnetzwerks (2) an die Anrufserver-Funktion (30);
Routen der SIP-INVITE-Nachricht mit der an der Anrufserver-Funktion (30) empfangenen geänderten Sitzungsbeschreibungsprotokoll-Nutzlast an einen Knoten (10) des ersten Zugangsnetzwerks (1); und
Öffnen einer zweiten Verbindung (200, 2010) zwischen dem Knoten (10) des ersten Zugangsnetzwerks (1) und dem Endgerät (40) über den Knoten (20) des zweiten Zugangsnetzwerks (2).

2. Das Verfahren nach Anspruch 1,
**dadurch gekennzeichnet,**
**dass** das Verfahren die folgenden weiteren Schritte umfasst:
Erkennen, durch den Knoten (10) des ersten Zugangsnetzwerks (1), der empfangenen SIP-INVITE-Nachricht mit der geänderten Sitzungsbeschreibungsprotokoll-Nutzlast als sich auf den Handover beziehend, und Senden einer Bestätigungsnachricht mit einer Sitzungsbeschreibungsprotokoll-Nutzlast, welche eine Adresse des Knotens (10) des ersten Zugangsnetzwerks (1) enthält, an die Anrufserver-Funktion (30);
Weiterleiten, durch die Anrufserver-Funktion (30), der empfangenen Bestätigungsnachricht mit der Sitzungsbeschreibungsprotokoll-Nutzlast, welche die Adresse des Knotens (10) des ersten Zugangsnetzwerks (1) enthält, an den Knoten (20) des zweiten Zugangsnetzwerks (2); und
Weiterleiten, durch die Anrufserver-Funktion (30), einer in dem Knoten (20) des zweiten Zugangsnetzwerks (2) erzeugten Bestätigung an den Knoten (10) des ersten Zugangsnetzwerks (1).

3. Das Verfahren nach Anspruch 1,
**dadurch gekennzeichnet,**
**dass** das Verfahren die folgenden weiteren Schritte umfasst:
Öffnen der zweiten Verbindung (200, 2010) zwischen dem Knoten (10) des ersten Zugangsnetzwerks (1) und dem Endgerät (40) über den Knoten (20) des zweiten Zugangsnetzwerks (2) durch Aufspalten, durch den Knoten (10) des ersten Zugangsnetzwerks (1), der ersten Verbindung (100) nach Empfang einer in dem Knoten (20) des zweiten Zugangsnetzwerks (2) erzeugten Bestätigungsnachricht von der Anrufserver-Funktion (30).

4. Das Verfahren nach Anspruch 1,
**dadurch gekennzeichnet,**
**dass** das Verfahren die folgenden weiteren Schritte umfasst:
Öffnen der zweiten Verbindung (200, 2010) zwischen dem Knoten (10) des ersten Zugangsnetzwerks (1) und dem Endgerät (40) über den Knoten (20) des zweiten Zugangsnetzwerks (2) durch Öffnen, durch den Knoten (20) des zweiten Zugangsnetzwerks (2), einer Verbindung (2010) zu dem Knoten (10) des ersten Zugangsnetzwerks (1) nach Senden einer Bestätigungsnachricht an die Anrufserver-Funktion (30).

5. Das Verfahren nach Anspruch 1,
**dadurch gekennzeichnet,**
**dass** das Verfahren die folgenden weiteren Schritte umfasst:
Abbrechen der ersten Verbindung (100) durch das Endgerät (40) oder den Knoten (10) des ersten Zugangsnetzwerks (1), wenn das Endgerät (40) oder der Knoten (10) des ersten Netzwerks (1) erkennt, dass es/er sowohl auf der ersten Verbindung (100) als auch auf der zweiten Verbindung (200, 2010) identische verbindungsbezogene Pakete empfängt.

6. Ein Kommunikationsnetzwerk (123) mit einem ersten Knoten (10) eines ersten Zugangsnetzwerks (1), einem zweiten Knoten (20) eines zweiten Zugangsnetzwerks (2), und einer Anrufserver-Funktion (30) zum Durchführen eines Handovers für ein Endgerät (40) mit einer über ein erstes Zugangsnetzwerk (1) aufgebauten ersten sitzungsorientierten Verbindung (100) zu einem Kommunikationspartner (50),
wobei die Anrufserver-Funktion (30) dazu ausgelegt ist, das Endgerät (40) nach Empfang einer Registrierungsanforderung vom Endgerät (40) über das zweite Zugangsnetzwerk (2) nach Erkennen, durch das Endgerät (40), der Verfügbarkeit des zweiten Zugangsnetzwerks (2), zu registrieren, wobei der zweite Knoten (20) dazu ausgelegt ist, eine von dem Endgerät (40) über das zweite Zugangsnetzwerk (2) gesendete und an den Kommunikationspartner (50) gerichtete SIP-INVITE-Nachricht zu empfangen, die empfangene SIP-INVITE-Nachricht zu beenden, eine in einer Sitzungsbeschreibungsprotokoll-Nutzlast der SIP-INVITE-Nachricht angegebene Adresse des Endgeräts (40) in eine Adresse des besagten zweiten Knotens (20) zu ändern und eine SIP-INVITE-Nachricht mit der geänderten Sitzungsbeschreibungsprotokoll-Nutzlast an die Anrufserver-Funktion (30) zu senden, wobei die Anrufserver-Funktion (30) weiterhin dazu ausgelegt ist, die von dem zweiten Knoten (20) empfangene SIP-INVITE-Nachricht mit der geänderten Sitzungsbeschreibungsprotokoll-Nutzlast an den ersten Knoten (10) zu senden, und wobei der erste Knoten (10) und der zweite Knoten (20) dazu ausgelegt sind, eine zweite Verbindung (200, 2010) zwischen dem ersten Knoten (10) und dem Endgerät (40) über den zweiten Knoten (20) zu öffnen.

## Revendications

1. Procédé de réalisation d'un transfert pour un terminal (40) ayant une première connexion (100) sous forme de session avec partenaire de communication (50) par le biais d'un premier réseau d'accès (1),
le procédé comprenant les étapes suivantes :
détection, par le terminal (40), de la disponibilité d'un deuxième réseau d'accès (2) ;
enregistrement du terminal (40) auprès d'une fonction de serveur d'appel (30) par le biais du deuxième réseau d'accès (2) ;
envoi, par le terminal (40), d'un message d'invitation SIP adressé au partenaire de communication (50) par le biais du deuxième réseau d'accès (2) ;
terminaison du message d'invitation SIP par un noeud (20) du deuxième réseau d'accès (2), modification, par ledit noeud (20) du deuxième réseau d'accès (2), d'une adresse du terminal (40) indiquée dans une charge utile du protocole de description de session du message d'invitation SIP en une adresse dudit noeud (20) du deuxième réseau d'accès (2), et envoi d'un message d'invitation SIP avec la charge utile du protocole de description de session modifiée dudit noeud (20) du deuxième réseau d'accès (2) vers la fonction de serveur d'appel (30) ;
acheminement du message d'invitation SIP avec la charge utile du protocole de description de session modifiée reçu par la fonction de serveur d'appel (30) à un noeud (10) du premier réseau d'accès (1) ; et
ouverture d'une deuxième connexion (200, 2010) entre le noeud (10) du premier réseau d'accès (1) et le terminal (40) par le biais du noeud (20) du deuxième réseau d'accès (2).

2. Procédé selon la revendication 1,
**caractérisé en ce**
**que** le procédé comprend les étapes supplémentaires suivantes :
reconnaissance, par le noeud (10) du premier réseau d'accès (1), du message d'invitation SIP avec la charge utile du protocole de description de session modifiée reçu comme se rapportant au transfert et envoi d'un message de confirmation avec une charge utile du protocole de description de session incluant une adresse du noeud (10) du premier réseau d'accès (1) à la fonction de serveur d'appel (30) ;
renvoi, par la fonction de serveur d'appel (30), du message de confirmation avec la charge utile du protocole de description de session reçu incluant l'adresse du noeud (10) du premier réseau d'accès (1) au noeud (20) du deuxième réseau d'accès (2) ; et renvoi, par la fonction de serveur d'appel (30), d'un message d'accusé de réception ayant pour origine le noeud (20) du deuxième réseau d'accès (2) au noeud (10) du premier réseau d'accès (1).

3. Procédé selon la revendication 1,
**caractérisé en ce**
**que** le procédé comprend les étapes supplémentaires suivantes :
ouverture de la deuxième connexion (200, 2010) entre le noeud (10) du premier réseau d'accès (1) et le terminal (40) par le biais du noeud (20) du deuxième réseau d'accès (2) en faisant bifurquer, par le noeud (10) du premier réseau d'accès (1), la première connexion (100) après la réception par la fonction de serveur d'appel (30) d'un message d'accusé de réception ayant pour origine le noeud (20) du deuxième réseau d'accès (2).

4. Procédé selon la revendication 1,
**caractérisé en ce**
**que** le procédé comprend les étapes supplémentaires suivantes :
ouverture de la deuxième connexion (200, 2010) entre le noeud (10) du premier réseau d'accès (1) et le terminal (40) par le biais du noeud (20) du deuxième réseau d'accès (2) en ouvrant, par le noeud (20) du deuxième réseau d'accès (2), une connexion (2010) vers le noeud (10) du premier réseau d'accès (1) après l'émission d'un message d'accusé de réception à la fonction de serveur d'appel (30).

5. Procédé selon la revendication 1,
**caractérisé en ce**
**que** le procédé comprend les étapes supplémentaires suivantes :
annulation de la première connexion (100) par le terminal (40) ou le noeud (10) du premier réseau d'accès (1) lorsque le terminal (40) ou le noeud (10) du premier réseau d'accès (1) détecte qu'il reçoit des paquets en rapport avec la connexion identiques à la fois sur la première connexion (100) et la deuxième connexion (200, 2010).

6. Réseau de communication (123) comprenant un premier noeud (10) d'un premier réseau d'accès (1), un deuxième noeud (20) d'un deuxième réseau d'accès (2) et une fonction de serveur d'appel (30) pour réaliser un transfert pour un terminal (40) ayant une première connexion (100) sous forme de session avec un partenaire de communication (50) par le biais du premier réseau d'accès (1),
la fonction de serveur d'appel (30) étant adaptée pour enregistrer le terminal (40) après la réception d'une demande d'enregistrement de la part du terminal (40) par le biais du deuxième réseau d'accès (2) après la détection, par le terminal (40), de la disponibilité du deuxième réseau d'accès (2), que le deuxième noeud (20) est adapté pour recevoir un message d'invitation SIP envoyé par le terminal (40) et adressé au partenaire de communication (50) par le biais du deuxième réseau d'accès (2), terminer le message d'invitation SIP reçu, modifier une adresse du terminal (40) indiquée dans une charge utile de protocole de description de session du message d'invitation SIP en une adresse dudit deuxième noeud (20), et envoyer un message d'invitation SIP avec la charge utile de protocole de description de session modifiée à la fonction de serveur d'appel (30), que la fonction de serveur d'appel (30) est en outre adaptée pour acheminer le message d'invitation SIP avec la charge utile de protocole de description de session modifiée reçu du deuxième noeud (20) en le premier noeud (10), et que le premier noeud (10) et le deuxième noeud (20) sont adaptés pour ouvrir une deuxième connexion (200, 2010) entre le premier noeud (10) et le terminal (40) par le biais du deuxième noeud (20).
